# EUROPÄISCHE PATENTANMELDUNG

(11) **EP 4 290 119 A1**
(43) Veröffentlichungstag der Anmeldung: **13.12.2023**
(21) Anmeldenummer: 23168766.6
(22) Anmeldetag: 19.04.2023
(51) Int. Cl.: F17C 9/00

(54) **KRYOGEN SPEICHERSYSTEM**

(30) Priorität: 18.05.2022 DE 102022204969
(71) Anmelder: MAGNA Energy Storage Systems GesmbH, 8261 Sinabelkirchen (AT)
(72) Erfinder: PUCHLEITNER, Rainer, 8052 Graz (AT); PUTSELYK, Sergiy, 7423 Pinkafeld (AT)
(74) Vertreter: Reuter, Silke Beatrix

(57) **Zusammenfassung**

Die Erfindung betrifft ein Speichersystem (1) zur Speicherung eines kryogenen Mediums, umfassend einen doppelwandigen Kryotank (2) der einen inneren Speicherbehälter (2) zur Aufnahme des Mediums, und einen den inneren Speicherbehälter (3) umgebenden Außenbehälter (4) umfasst, wobei zwischen Speicherbehälter (3) und Außenbehälter (4) ein evakuierter Hohlraum (5) besteht, wobei eine Entnahmeleitung als Entnahmestrang eine fluidleitende Verbindung vom Innenraum des Speicherbehälters (3) bis zu einem Verbraucheranschluss (10) bildet, wobei in dem Entnahmestrang ein erstes Leitungs-Absperrventil (11) und ein zweites steuerbares Leitungs-Absperrventil (12) und ein erster Wärmetauscher (14) angeordnet ist, wobei zusätzlich zum Druckaufbau ein Druckaufbausystem vorgesehen ist. Dieses Speichersystem soll derart weitergebildet werden, dass es insbesondere im Falle eines Crashs derart betriebssicher ausgeführt ist, dass ein Absperrung des Speichersystems und Entweichen des gespeicherten kryogenen Mediums verhindert wird. Dies wird dadurch erreicht, dass der erste Wärmetauscher (14) innerhalb des evakuierten Hohlraums (5) angeordnet ist, und dass das Speichersystem (1) ein erstes Leitungs-Absperrventil (11), welches in der Gasentnahmeleitung angeordnet ist, umfasst, wobei das erste Leitungs-Absperrventil (11) im Falle eines Bruchs einer fluidleitenden Verbindung automatisch die Strömung absperrt.

## Beschreibung

Die vorliegende Erfindung betrifft ein Speichersystem zur Speicherung eines kryogenen Mediums, insbesondere zur Speicherung von Wasserstoff.

Es ist bekannt, dass kryogene Medien, also tiefkalte und zumindest teilweise flüssige Medien, wie Wasserstoff oder Helium, in einem Speicherbehälter aufbewahrt werden können, um Energie über entsprechende Entnahmeleitungen zu einem Verbraucher zu transportieren.

Die Speicherung von Gasen, insbesondere von Wasserstoff, im tiefkalten Zustand ist hinsichtlich Energiedichte besonders geeignet für den mobilen Einsatz, insbesondere in Kraftfahrzeugen zum Erzielen großer Reichweiten.

Für die Speicherung der kryogenen Medien werden üblicherweise vakuumisolierte Speicherbehälter eingesetzt, die aus einem doppelwandigen Behälter mit einem Innenbehälter und einem Außenbehälter bestehen. Der Hohlraum zwischen den beiden Behältern ist zur Reduzierung des Wärmestroms evakuiert und mit einer Isolationsschicht versehen.

Ausgehend von dem Speicherbehälter erfolgt dann der Transport über Entnahmeleitungen zu dem Verbraucher, so dass eine Umsetzung der gespeicherten Energie in Antriebsenergie beispielsweise mittels Brennstoffzellen und Elektromotor erfolgen kann. Nebst den allgemein mit der Speicherung und Handhabung kryogener Medien verbundenen Problemen stellen sich speziell für den mobilen Einsatz noch weitere Anforderungen.

Der Betrieb von Kraftfahrzeugen mit kryogenen Speichersystemen wird grundsätzlich als sehr sicher eingeschätzt, da die Zulassungsverfahren sehr streng sind. Bekannte Speichersysteme verfügen über eine Vielzahl von Vorkehrungen, die sowohl beim Betrieb des Fahrzeugs sowie auch im Falle eines Unfalls eine ausreichende Sicherheit gewährleisten. Zu diesen Sicherheitsvorkehrungen gehören beispielsweise eine Anordnung des Speichersystems an einer geschützten Einbaustelle, eine Ausstattung des Speichersystems mit Druckentlastungseinrichtungen und Schmelzsicherungen, die auf Druck respektive Temperatur ansprechen, sowie der Einsatz von Sicherheitsventilen wie Druckreduktionsventile, die den Gasdruck vom Speicherdruckniveau auf das Druckniveau der Entnahmeleitung zum Verbraucher/Brennstoffzelle reduzieren.

Dies hat wesentliche Sicherheitsvorteile, falls bei einem Aufprall die Leitung vom Tank abgerissen wird, weil dann nur der reduzierte Druck in der Entnahmeleitung, die die Verbindung vom inneren des Tanks bis zu dem Verbraucher darstellt, ansteht.

Des Weiteren ist es bekannt, zum sicheren Betrieb von kryogenen Speichersystemen, eine Möglichkeit der Absperrung des mit dem kryogenen Medium gefüllten Innentanks zum Verbraucher vorzusehen. Üblicherweise wird diese Absperrung in Form eines Absperrventils direkt am Entnahmepfad am Ausgang des inneren Druckbehälters ausgeführt.

Nachteilig hierbei ist es allerdings, dass im Falle eines Unfalls des Kraftfahrzeugs mit eingebautem kryogenen Speichersystem es zu einer Beschädigung von Rohrleitungen kommen kann, die außerhalb des doppelwandigen Speicherbehälters angeordnet sind. In diesem Fall kann der Innenbehälter auslaufen.

Vor diesem Hintergrund stellt sich die vorliegende Erfindung die Aufgabe ein kryogenes Speichersystem für den mobilen Betrieb derart weiterzubilden, dass es insbesondere im Falle eines Crashs derart betriebssicher ausgeführt ist, dass ein Absperrung des Speichersystems und Entweichen des gespeicherten kryogenen Mediums verhindert wird.

Diese Aufgabe löst die vorliegende Erfindung durch ein Kryogen Speichersystem mit den in Patentanspruch 1 angegebenen Merkmalen.

Durch die erfindungsgemäße Anordnung wird eine Absicherung im Falle eines Unfalls erreicht, indem eine gesonderte Trennung von Umgebung und Innenbehälter vorgesehen ist und somit ein Auslaufen des im Innenbehälter gespeicherten kryogenen Mediums verhindert wird.

Hierfür wird in einer Entnahmeleitung eines kryogenen Speichersystems, wobei die Entnahmeleitung einen Entnahmestrang bildet, ein Leitungs-Absperrventil ausgeführt, welches im Falle eines Bruchs der Entnahmeleitung beispielsweise bei einem Unfall die Strömung automatisch unterbricht.

Erfindungsgemäß wird die Entnahmeleitung als Gasentnahmeleitung ausgeführt, wobei die Gasentnahmeleitung einen Entnahmestrang bildet, der das gasförmige Medium ausgehend von dem Speicherbehälter einem Verbraucher über einen Verbraucheranschluss zuführt. In der Gasentnahmeleitung ist ein Leitungs-Absperrventil ausgeführt, welches im Falle eines Bruchs der Gasentnahmeleitung beispielsweise bei einem Unfall die Strömung automatisch unterbricht.

In einer bevorzugten Ausführungsform ist die Entnahmeleitung eine Gasentnahmeleitung eine weitere Flüssigkeitsentnahmeleitung ist bei dem erfindungsgemäßen Speichersystem nicht vorgesehen.

In einer weiteren bevorzugten Ausführungsform ist als Entnahmeleitung eine Flüssigkeitsentnahmeleitung vorgesehen.

In einer ersten Ausführungsform ist das Leitungs-Absperrventil in dem evakuierten Hohlraum zwischen Innenbehälter und Außenbehälter vor einem ersten Wärmetauscher angeordnet. Hierbei muss das Leitungs-Absperrventil auf kryogenen Temperaturen betrieben werden. Diese Anordnung benötigt zwar eine aufwändige Isolierung des "Sicherheitsventils", bietet allerdings die höchste Sicherheit im Falle eines Unfalls.

In einer zweiten Ausführungsform ist das Leitungs-Absperrventil in dem evakuierten Hohlraum zwischen Innenbehälter und Außenbehälter stromaufwärts hinter dem ersten Wärmetauscher angeordnet. Bei dieser Ausführungsform kann das Leitungs-Absperrventil unter "warmen Temperaturen" betrieben werden, so dass eine aufwändige Konstruktion des Ventilkörpers entfallen kann.

Die Erfindung wird nachfolgend anhand in den Zeichnungen schematisch dargestellter Ausführungsbeispiele beschrieben.

Es zeigt:
- Fig. 1: eine schematische Darstellung eines erfindungsgemäßen Speichersystems in einer ersten Ausführungsform; und
- Fig. 2: eine schematische Darstellung eines erfindungsgemäßen Speichersystems in einer zweiten Ausführungsform.

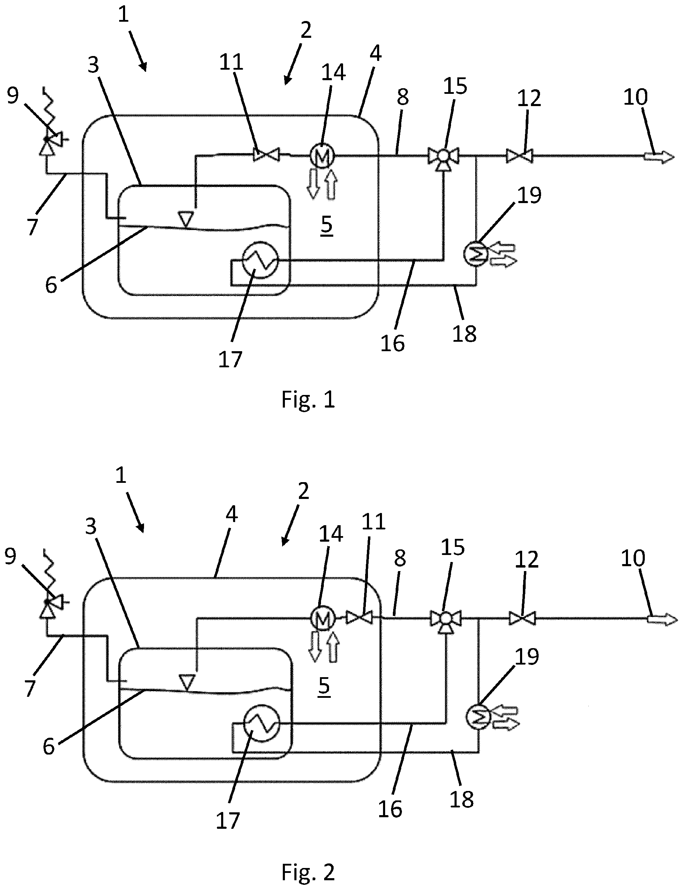

In der Fig.1 ist ein erfindungsgemäßes Speichersystem 1 zur Speicherung eines kryogenen Mediums, insbesondere zur Speicherung von Wasserstoff, dargestellt. Die nachfolgende Beschreibung bezieht sich auf die Verwendung von Wasserstoff als kryogenes Medium. Es ist für den Fachmann allerdings selbstverständlich, dass auch andere Medien eingesetzt werden können.

Das Speichersystem 1 umfasst einen Kryotank 2 der zur Speicherung von Flüssigwasserstoff in einem nicht dargestellten Kraftfahrzeug eingebaut ist. Der Kryotank 2 ist ein doppelwandiger Behälter und umfasst einen inneren druckfesten Speicherbehälter 3, der in einem Außenbehälter 4 gelagert ist. Die Lagerung dient der Positionierung der beiden Schalen des doppelwandigen Behälters und umfasst zwischen Außenbehälter 4 und Innenbehälter/Speicherbehälter 3 abschnittsweise nicht gezeigte Aufhängungen. Der Hohlraum 5 zwischen dem inneren Speicherbehälter 3 und dem Außenbehälter 4 ist zur Reduzierung des Wärmestroms und somit zum Schutz des Speicherbehälters 3 von zusätzlichem Wärmeeinfall evakuiert und mit einer Isolationsschicht versehen. Der Hohlraum wird nachfolgend als Vakuumraum bezeichnet.

Der Außenbehälter 4 wird durch eine Behälterwand begrenzt, die eine Außenseite 4a und eine gegenüberliegende zum Speicherbehälter 3 weisende Innenseite umfasst.

Das kryogene Medium, insbesondere Wasserstoff, befindet sich im unteren Bereich des Speicherbehälters 3, nämlich unterhalb der in den Figuren als Wellenlinie dargestellten Flüssigkeitsoberfläche 6 als Flüssigkeit im Speicherbehälter 3, oberhalb der Flüssigkeitsoberfläche 6 in gasförmigem Zustand.

Eine Gasentnahmeleitung 8 ist zur Entnahme des gasförmigen Mediums aus dem Speicherbehälter 3 eingerichtet, so dass das freie Ende der Gasentnahmeleitung 8 oberhalb der Flüssigkeitsoberfläche 6, in der Nähe der Decke des Speicherbehälters 3, im Speicherbehälter 3 endet.

Die Gasentnahmeleitung 8 bildet einen Entnahmestrang, der das gasförmige Medium ausgehend von dem Speicherbehälter einem Verbraucher über einen Verbraucheranschluss 10, insbesondere einer Brennstoffzelle als Verbraucher zuführt. Wie es aus den Figuren zu erkennen ist, ist die Gasentnahmeleitung ausgehend von dem Innenraum des Speicherbehälters 3 durch die Behälterwand des Speicherbehälters 3, den Vakuumraum 5, die Behälterwand des Außenbehälters 4 in die Außenumgebung A geführt.

Eine Flüssigentnahmeleitung zur Entnahme des flüssigen Mediums aus dem Speicherbehälter 3 ist nicht eingerichtet.

Des Weiteren umfasst das Speichersystem 1 aus sicherheitsrechtlichen Aspekten eine Überdruckentlastungsleitung 7, deren freies Ende ebenfalls oberhalb der Flüssigkeitsoberfläche 6 endet und aus dem doppelwandigen Kryotank 2 nach außen geführt ist und ein ÜberdruckSicherheitsventil 9 enthält.

Die Begriffe "Decken" und "Boden" beziehen sich dabei auf die übliche Einbaulage des Speicherbehälters, beispielsweise in einer fahrenden, schwimmenden oder fliegenden Transportvorrichtung, wobei die Gravitation in einem Normalbetrieb der Transportvorrichtung in Richtung zum Boden des Speicherbehälters wirkt.

In der Gasentnahmeleitung 8 ist ausgehend von dem Speicherbehälter in Richtung Verbraucher zunächst ein erstes Leitungs-Absperrventil 11 angeordnet. Das erste Leitungs-Absperrventil 11 befindet sich außerhalb des Speicherbehälters 3 und innerhalb des Vakuumraums 5 des doppelwandigen Kryotanks 2.

Das erste Leitungs-Absperrventil 11 ist als automatisches Sicherheitsventil ausgeführt, welches im Falle eines Bruchs der Gasentnahmeleitung beispielsweise bei einem Unfall die Strömung unterbricht.

Ein zweites steuerbares Leitungs-Absperrventil 12 ist außerhalb des Außenbehälters 4 in der Gasentnahmeleitung 8 vor dem Verbraucheranschluss angeordnet.

Das zweite Leitungs-Absperrventil ist durch eine Steuervorrichtung steuerbar. Dabei kann die Strömung durch das Leitungs-Absperrventile bevorzugt nicht nur unterbrochen werden oder freigegeben werden, sondern auch reduziert werden.

In der Gasentnahmeleitung 8 ist diese nach dem ersten Leitungs-Absperrventil 11 mit einem ersten Wärmetauscher 14 zur Erwärmung des entnommenen Mediums/ tiefkühlen Wasserstoffs strömungsverbunden. Der Wärmetauscher 14 wird eingesetzt, um den Wasserstoff von kryogenen Temperaturen auf Umgebungstemperatur zu erwärmen. Der erste Wärmetauscher 14 ist ebenfalls innerhalb des Vakuumraums 5 angeordnet.

Wie es aus der Darstellung der Figur 1 zu erkennen ist, ist in der Gasentnahmeleitung 8 außerhalb des Außenbehälters 4 ein 3/2 Wegeventil angeordnet.

Der auf Umgebungstemperatur erwärmte Wasserstoff strömt demnach durch die durch den Außenbehälter geführte Gasentnahmeleitung 8 durch das 3/2 Wegeventil und das nachfolgend angeordnete zweites steuerbares Leitungs-Absperrventil 12 zum Verbraucheranschluss 10.

Zur Druckerhöhung bzw. Druckerhaltung in dem Innenbehälter 3 des Kryotanks 2 umfasst das Speichersystem 1 ein Druckaufbausystem. Dieses Druckaufbausystem kann den bei der gasförmigen Entnahme des Wasserstoffs entstehenden Druckabfall ausgleichen. Hierfür kann durch entsprechende Ansteuerung des 3/2 Wegeventils ein Teilstrom durch Massenstromregelung des durch die Gasentnahmeleitung 8 entnommenen und vom ersten Wärmetauscher 14 erwärmten Mediums durch eine Strömungsleitung 16 zu einem Innenbehälter-Wärmetauscher 17 gelangen. Dieser Innenbehälter-Wärmetauscher 4 ist zur Erwärmung des flüssigen Mediums im Speicherbehälter 3 angeordnet, der von dem aus der Strömungsleitung 16 stromabwärts zugeführten Medium durchflossen wird. Durch die Erwärmung am Innenbehälter-Wärmetauscher 17 wird das flüssige Medium im Speicherbehälter 3 teilweise erwärmt und verdampft, was zu einem Druckanstieg führt.

Stromabwärts des Innenbehälter-Wärmetauschers 17 und außerhalb des Speicherbehälters 3, sowie außerhalb des Außenbehälters 4 des doppelwandigen Behälters, ist in einer Strömungsleitung 18 ein zweiter Wärmetauscher 19 zur Erwärmung des Mediums angeordnet.

Die Strömungsleitung 19 mündet in einer Einmündung in der Gasentnahmeleitung 8 zwischen dem 3/2 Wegeventil und dem steuerbaren Leitungs-Absperrventil 12.

In einer alternativen in der Figur 2 gezeigten Ausführungsform ist im Unterschied zu der Figur 1 das erste Leitungs-Absperrventil 11 hinter dem ersten Wärmetauscher 14 angeordnet. Das Leitungs-Absperrventil 11 ist stromabwärts allerdings in dem evakuierten Hohlraum 5 zwischen Innenbehälter 3 und Außenbehälter angeordnet.

In einer nicht dargestellten Ausführungsform ist das Leitungs-Absperrventil 11 in einer Flüssigentnahmeleitung ausgeführt. Der grundsätzliche Aufbau des Speichersystems 1 ist ansonsten, wie oben in mehreren Varianten beschrieben, gleich.

### Bezugszeichenliste

- 1: Speichersystem
- 2: Kryotank
- 3: Speicherbehälter/ Innenbehälter
- 4: Außenbehälter
- 4a: Außenseite des Außenbehälters
- 5: Hohlraum/Vakuumraum
- 6: Flüssigkeitsoberfläche
- 7: Überdruckentlastungsleitung
- 8: Gasentnahmeleitung
- 9: Überdrucksicherheitsventil
- 10: Verbraucheranschluss
- 11: erstes automatisches Leitungs-Absperrventil
- 12: zweites steuerbares Leitungs-Absperrventil
- 14: erster Wärmetauscher
- 15: Massenstromregelventil - 3/2 Wegeventil
- 16: Strömungsleitung
- 17: Innenbehälter- Wärmetauscher
- 18: Strömungsleitung
- 19: zweiter Wärmetauscher

## Patentansprüche

1. Speichersystem (1) zur Speicherung eines kryogenen Mediums, insbesondere zur Speicherung von Wasserstoff, umfassend einen doppelwandigen Kryotank (2) der einen inneren Speicherbehälter (2) zur Aufnahme des Mediums, und einen den inneren Speicherbehälter (3) umgebenden Außenbehälter (4) umfasst, wobei zwischen Speicherbehälter (3) und Außenbehälter (4) ein evakuierter Hohlraum (5) besteht, wobei eine Entnahmeleitung als Entnahmestrang eine fluidleitende Verbindung vom Innenraum des Speicherbehälters (3) bis zu einem Verbraucheranschluss (10), zum Anschluss eines Verbrauchers, bildet, und wobei das Speichersystem (1) ein erstes Leitungs-Absperrventil (11), welches in der Entnahmeleitung angeordnet ist, umfasst, und wobei in dem Entnahmestrang zumindest ein zweites steuerbares Leitungs-Absperrventil (12) und ein erster Wärmetauscher (14) angeordnet ist, wobei zusätzlich zum Druckaufbau ein Druckaufbausystem vorgesehen ist, welches ein in der Entnahmeleitung außerhalb des Kryotanks (2) angeordnetes Massenstromregelventil (3/2 Wegeventil (15)), einen über eine Leitung (16) strömungsverbundenen Innenbehälter-Wärmetauscher (17) und einen stromaufwärts über eine Leitung (18) strömungsverbundenen zweiten Wärmetauscher (19) umfasst, **dadurch gekennzeichnet, dass** die Entnahmeleitung eine Gasentnahmeleitung (8) ist, und dass der erste Wärmetauscher (14) innerhalb des evakuierten Hohlraums (5) angeordnet ist, und dass das erste Leitung-Absperrventil (11) innerhalb des evakuierten Hohlraums (5) stromabwärts vor oder stromaufwärts hinter dem ersten Wärmetauscher (14) angeordnet ist, und wobei das erste Leitungs-Absperrventil (11) im Falle eines Bruchs einer fluidleitenden Verbindung automatisch die Strömung absperrt.

2. Speichersystem (1) zur Speicherung eines kryogenen Mediums, insbesondere zur Speicherung von Wasserstoff, **dadurch gekennzeichnet, dass** das Speichersystem (1) keine Flüssigkeitsentnahmeleitung umfasst.
